# EUROPEAN PATENT APPLICATION

(11) **EP 4 455 967 A1**
(43) Date of publication of application: **30.10.2024**
(21) Application number: 23169894.5
(22) Date of filing: 25.04.2023
(51) Int. Cl.: G06Q 10/20, G06Q 10/0639, G06Q 10/0635, G06Q 10/0637, G06Q 10/0631, G06Q 50/04, G06Q 50/28

(54) **COMPUTER-IMPLEMENTED METHOD FOR OPTIMIZING A MAINTENANCE SCHEDULE FOR MAINTAINING A TECHNICAL SYSTEM OR AT LEAST ONE TECHNICAL COMPONENT OF THE TECHNICAL SYSTEM**

(71) Applicant: Siemens Aktiengesellschaft, 80333 München (DE)
(72) Inventor: Khalil, Mohamed, 81379 München (DE); Liebig, Veronika, 86551 Aichach (DE); Malik, Vincent, 80636 München (DE); Montrone, Francesco, 85521 Riemerling (DE); Obst, Birgit, 80935 München (DE); Sievers, Felix, 82319 Starnberg (DE)
(74) Representative: Siemens Patent Attorneys

(57) **Abstract**

The invention relates to Computer-implemented method for optimizing a maintenance schedule for maintaining a technical system or at least one technical component of the technical system, comprising the steps: a. Providing a plurality of sustainability data items; b. Providing at least one remaining lifetime for at least one sustainability data item of the plurality of sustainability data items; wherein the at least one remaining lifetime is determined using physics-based modeling or at least one pre-specified maintenance plan; c. Optimizing the maintenance schedule with regard to a minimal ecological footprint based on the plurality of sustainability data items and the at least one remaining lifetime; and d. Providing the optimized maintenance schedule as output.

Further, the invention relates to a corresponding computer program product and technical system.

## Description

### 1. Technical field

The present invention relates to a computer-implemented method for optimizing a maintenance schedule for maintaining a technical system or at least one technical component of the technical system. Further, the invention relates to a corresponding computer program product and technical system.

### 2. Prior art

Currently there is a trend of digitalization in the industry domain. Hence, e.g. a manufacturing process for a product may be digitally controlled. For describing several facets of this trend the term "Industry 4.0" (in German: "Industrie 4.0") is a commonly used. It has become not only a major part of today's industry, but it also drives the business in many industrial domains.

Considering complex industrial plants, the industrial plants usually comprise distinct parts, modules or units with a multiplicity of individual functions. Exemplary units include sensors and actuators. The units and functions have to be controlled and regulated in an interacting manner. They are often monitored, controlled, and regulated by an automation system, for example the Simatic system of Siemens AG. The units can either exchange data directly with one another or communicate via a bus system. The units are connected to the bus system via parallel or, more often, serial interfaces.

The increasing digitalization allows for manufacturing or industrial installation of products in a production line of the industrial plant to be performed by robot units or other autonomous units in an automatic manner and thus efficiently at least in part up to now.

Moreover, the products have to be maintained e.g. on a regular basis by means of maintenance or service intervals. The predictive maintenance services or activities aim at the utilization of the full lifetimes of products without running to products' failures.

However, according to prior art, sustainability aspects are not sufficiently considered. It remains a challenge to reduce the CO2 emissions caused by the maintenance services. Thereby, the sustainability is influenced by diverse factors, such as when service work for components is performed, whether the work is synchronous or spread, how many service workers will travel to the production site, how spare part transports are organized etc.

It is therefore an objective of the invention to provide a computer-implemented method for optimizing a maintenance schedule for maintaining a technical system or at least one technical component of the technical system, which leads to a smaller ecological footprint.

### 3. Summary of the invention

This problem is according to one aspect of the invention solved by a computer-implemented method for optimizing a maintenance schedule for maintaining a technical system or at least one technical component of the technical system, comprising the steps:
a. Providing a plurality of sustainability data items;
b. Providing at least one remaining lifetime for at least one sustainability data item of the plurality of sustainability data items; wherein the at least one remaining lifetime is determined using physics-based modeling or at least one prespecified maintenance plan;
c. Optimizing the maintenance schedule with regard to a minimal ecological footprint based on the plurality of sustainability data items and the at least one remaining lifetime; and
d. Providing the optimized maintenance schedule as output.

Accordingly, the invention is directed to a computer-implemented method for optimizing a maintenance schedule for maintaining a technical system or at least one technical component of the technical system. According to which, the technical system or the at least one component is maintained using the maintenance schedule. The maintenance schedule is optimized and hence improved. Preferably, the technical system is designed as industrial plant or production site for products.

First, the input data is provided, namely the plurality of sustainability data items and the at least one remaining lifetime for the at least one sustainability data item. Thereby, the sustainability data items refer to components, whose compromised performance and / or failure is critical to the overall functional performance and the environmental impact of the technical system. Hence, the data item is associated with a corresponding lifetime, preferably each data item is associated with a corresponding lifetime. Thereby, the lifetime is an estimate of useful lifetime of a component. The lifetime can be limited by a threshold for the degradation of the technical system's performance as it undergoes one or more operation scenarios. Missing information about the actual lifetime of the system can result in unplanned outages with long downtimes for corrective maintenance activities or unnecessary preventive maintenance activities with spare parts replacements of well-performing (sub-)components.

The present invention considers the prospective lifetime of the technical system to improve the maintenance schedule, through suggesting maintenance activities to be carried out only at times of necessity. The data items can be related to products and hence comprise information or data related to the products. Hence, in this case, the data can comprise product information and product-specific information, such as an environmental impact category or the like.

The input data can be received and/or transmitted via one or more input interfaces of a technical unit, wherein the technical unit can be designed as any computing unit. Accordingly, additionally, or alternatively, the output data in form of the optimized maintenance schedule can be sent via one or more output interfaces. This way, data can be efficiently transmitted between computing units reducing data traffic and allowing for bidirectional data exchange.

The input data can be extended with additional data or information, such as operational conditions, environmental conditions, scenario configuration and/or Key Performance Indicators ("KPIs"). The KPIs can be utilized for e.g. production, cost or quality. Moreover, diverse sustainability impact categories or values, e.g. acidification, freshwater eutrophication, ozone depletion, or particle pollution, and most popular the CO2-equivalent or greenhouse gases representing the ecological footprint can be considered.

The input data is provided or received as input for the optimization step. Hence, the input data is used for optimizing the maintenance schedule for a minimal ecological footprint. Most popular, the ecological footprint is calculated as the CO2 equivalent emission. However, the ecological footprint is not limited to CO2. Hence other considerations and other sustainability impact categories can enter the ecological footprint. The minimal ecological footprint can be equally referred to as sustainably optimization objective or sustainability aspect.

The advantage of the present invention is that, contrary to prior art, the sustainability aspects are considered in the sense of the minimal ecological footprint. For example, the invention can reduce and minimize CO2e emissions that are caused by maintenance services of products. This ensures advantageously additional CO2e-savings.

A further advantage is that its environmental impact is minimized without impairing its reliability and efficiency.

The invention, in other words, allows to find the best sustainability-aware decisions on maintenance works.

A further advantage is that the invention is not limited to CO2 emissions, but instead diverse footprints and hence sustainability aspects can be flexibly considered.

In prior art, usually the ecological footprint is not considered at all, if at all solely in design phases. The decisions with regard to operation and maintenance strategies do not incorporate environmental impact aspects up to now at runtime and hence operational phase.

In an aspect the plurality of sustainability data items is stored in a volatile storage unit or a non-volatile storage unit. Accordingly, the data items are stored in a storage unit in a reliable manner, hence preventing data loss. The storage unit can be flexibly selected, including e.g. database and cloud.

In a further aspect step a. Providing the plurality of sustainability data items comprises receiving the plurality of sustainability data items from the storage unit by means of an input interface; wherein the input interface is preferably an application programming interface, API, even more preferably a Representational State Transfer-API.

The LCA (lifecycle environmental impact assessment) modeling of the system's components, including their material retrieval, transportation, production processing steps are accessible as input for the optimization of the maintenance schedule for its environmental footprint.

Accordingly, this allows to provide a LCA evaluation service that can be used by a maintenance optimization service. The same holds for the simulation service providing calculations of components' remaining lifetimes and necessary replacements times for running at forecasted specific operational conditions.

In an aspect the at least one remaining lifetime is determined for each sustainability data item of the plurality of sustainability data items. Accordingly, the data items are associated with corresponding remaining lifetimes. In other words, each data item is assigned to its remaining lifetime. This extended input data has proven to be advantageous in view of the quality of the optimization output and hence results, such as reduction of CO2 emissions.

In an aspect the method further comprises maintaining the technical system or the at least one technical component of the technical system using the optimized maintenance schedule. Accordingly, the optimized maintenance schedule is used for maintaining the technical system or the at least one technical component of the technical system. The optimization in the maintenance plan has a significant impact on the maintenance. The maintenance is improved in the sense that the optimization factor, namely the minimal ecological footprint, is considered during maintenance. The products are maintained depending on the minimal ecological footprint.

In an aspect the method further comprises
- Outputting the optimized maintenance schedule;
- Storing the optimized maintenance schedule;
- Displaying the optimized maintenance schedule;
- Transmitting the optimized maintenance schedule to a computing unit; and/or
- Evaluating the optimized maintenance schedule.

Accordingly, the input data, data of intermediate method steps and/or resulting output data can be further handled. The output data is in particular the optimized maintenance schedule. This output information can be extended with additional information. One or more actions can be performed. The action can be equally referred to as measure.

These actions can be performed by one or more technical units, such as computing unit or robot unit. The actions can be performed gradually or simultaneously. Actions include e.g. storing and processing steps. The advantage is that appropriate actions can be performed in a timely manner.

According to an embodiment, the optimized maintenance schedule can be displayed to a user or technical expert for further evaluation by means of a display unit. The optimized maintenance schedule can be reviewed by the technical expert or automatically by means of a computing or processing unit during the evaluation. This way, the optimized maintenance schedule undergoes a post-processing step and hence additional check before being released for maintenance. The optimized maintenance schedule can be approved depending on the evaluation result.

A further aspect of the invention is a computer program product directly loadable into an internal memory of a computer, comprising software code portions for performing the steps according to any one of the preceding claims when said computer program product is running on a computer.

A further aspect of the invention is a technical system for performing the aforementioned computer-implemented method.

### 4. Short description of the drawings

In the following detailed description, presently preferred embodiments of the invention are further described with reference to the following figures:
- Fig. 1: illustrates a flowchart of the computer-implemented method according to the invention.
- Fig. 2: illustrates the technical system according to an embodiment.

### 5. Detailed description of preferred embodiments

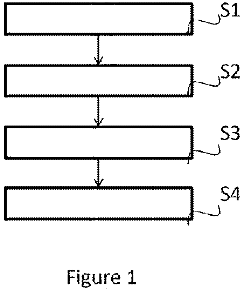

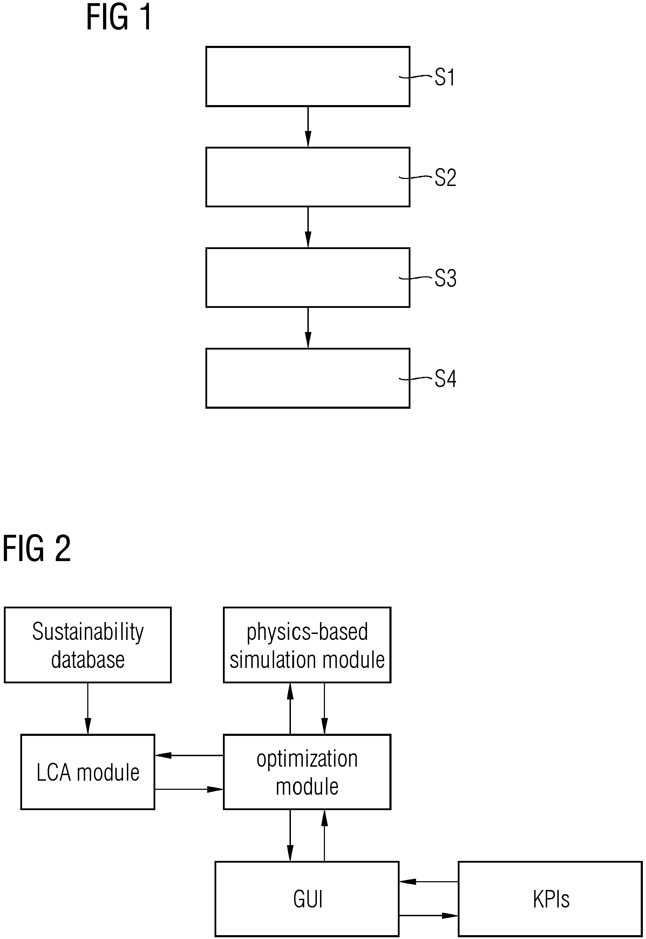

Figure 1 illustrates a flowchart of the computer-implemented method according to the invention.

In the first step, the plurality of sustainability data items is provided S1. In the second step, the at least one remaining lifetime is provided for the at least one sustainability data item of the plurality of sustainability data items S2. The at least one remaining lifetime is determined using physics-based modeling or at least one pre-specified maintenance plan. In the next step, the optimization step, the maintenance schedule is optimized with regard to the minimal ecological footprint based on the plurality of sustainability data items and the at least one remaining lifetime S3. This results in the optimized maintenance schedule as output, which is then provided in the last step S4.

### Input data, the sustainability data items S1

In an embodiment, the sustainability data items are retrieved from a database e.g., via SQL queries. This database can be maintained in a green digital twin ecosystem. Moreover, the database can be kept up to date for diverse applications, like life cycle environmental impact assessments ("LCA"). This embodiment allows for transparency on sustainability impacts of feasible maintenance schedules that fit the predicted remaining lives of e.g. motor components.

### Input data, the remaining life times S2

In an embodiment, the lifetimes are determined by means of physics-based modeling. Therefore, a physics-based simulation model can be utilized. This model translates the physical load profile into lifetime relevant results (values that are not or cannot be measured) - used in models for remaining lifetimes. Examples include temperature calculations for the aging prediction of winding insolation and bearing oil. The resulting remaining lifetimes limit the scheduling decision by the latest point in time for necessary maintenance work.

### Optimization S3

The input data is then used for optimization, according to an embodiment, to set up a multi-objective optimization problem. Contrary to prior art objectives like minimal downtimes and maximum overall equipment efficiency (OEE), the objective of the optimization problem is a minimal ecological footprint. The result of the optimization is the optimized maintenance schedule.

Figure 2 illustrates various components of the technical system according to an embodiment. The technical system can be equally referred to as optimization system.

Sustainability database for material retrieval, transportation, local energy mixes, and production process steps:
The sustainability database contains the quantitative assessments with respect to the sustainability impact categories for material retrieval, transportation means, industrial production process steps. This information is needed by the LCA module.

LCA module with sustainability evaluation service:
The LCA (life cycle (environmental impact) assessment) module provides a service for evaluating the sustainability aspects of maintenance activities. Thereby, the maintenance activities are e.g. transportation of spare parts and traveling of service staff. The sustainability aspects also include the product carbon footprint of spare parts. Up to now LCA modeling has not been used for decisions during system operation, but for assessing a system's environmental impact, e.g. from cradle to gate, cradle to end-of-life or cradle to cradle. Contrary to prior art, the assessments according to this embodiment are done during the operation phase.
The LCA module receives as input the relevant information like means of transportation for staff and spare parts, or site coordinates for looking up the energy mix at the site. The LCA module provides as output e.g. CO2e-values and/or values for other relevant sustainability impact categories. The service of the LCA module is requested e.g., via a REST API call of the optimization module that provides the input to the LCA module and receives the output of the LCA module.

Physics based simulation module providing lifetime calculation service:
The physics-based simulation module provides the service to calculate remaining lifetimes of components of the production system. Thereby, the input data comprises e.g. components (asset data, configuration), operating conditions (load profiles) and/or environmental conditions (ambient temperature, humidity, etc.). Thereby, the output data comprises remaining (useful) lifetimes of components at current point in time. The service of the physics-based simulation module is called e.g., via a REST API by the optimization module.

Optimization module:
The output data of the LCA module and the physics-based simulation module allow the optimization module to schedule maintenance times with minimal environmental impact, in combination with environmentally best operating modes that still comply with ecological and technical constraints. The optimization variables are the maintenance times for consuming as much as possible of remaining components' lifetimes, degrees of freedom in operation modes that may affect the lifetimes' consumption velocity, and transport arrangements for supply of spare parts as well as traveling of service staff. Unconsumed lifetimes can be related to CO2e of the component's production that is wasted. On the other hand, multiple traveling of service staff to the factory site for the separate replacements of each component at different times will also increase the CO2e impact, and on top of that there is the negative environmental impact caused by the process of additional factory shutdown and restart (especially in chemical process industries).

GUI of maintenance optimizer including an integrated SPI (sustainability performance indicator) Dashboard:
The GUI for the optimization module can comprise a SPI (sustainability performance indicator) dashboard to make maintenance decisions transparent for the operator.

The GUI also allows for configuring the following data:
- Asset data specification and configuration of the system
- Load profile / Operational conditions:
   entering constraints on allowed operating modes might provide some degrees of freedom for the optimization module to select an operating mode to slow down lifetime consumptions of specific components.
- Environmental conditions can be e.g., ambient temperature, air humidity, etc. in case these conditions are relevant for system operation.
- KPI constraints: there might be e.g., contractual constraints on the production like delivery times of products or some economic KPIs that shall be included in the optimization in case there is more than one solution to achieve the minimal ecological footprint.

Example of optimization:
As an example, two components A and B are considered. The consumption of their lifetime requires maintenance work at different times, e.g. replacement of component B would be a few weeks later than the replacement of A. For simplicity the spare parts are assumed to be already onsite. Then a solution with minimal ecological footprint could be
a) Changing operation mode (within allowed constraints) such that the lifetime of A is consumed at lower speed resulting in synchronized replacements of A and B and service staff to travel only once to the factory site.
b) Replacements of A and B at separate times, when the CO2e of the wasted lifetime of B is already smaller than the CO2e for the additional traveling of service staff plus additional restart of the factory (block).

## Claims

1. Computer-implemented method for optimizing a maintenance schedule for maintaining a technical system or at least one technical component of the technical system, comprising the steps:
a. Providing a plurality of sustainability data items (S1) ;
b. Providing at least one remaining lifetime for at least one sustainability data item of the plurality of sustainability data items (S2); wherein
the at least one remaining lifetime is determined using physics-based modeling or at least one pre-specified maintenance plan;
c. Optimizing the maintenance schedule with regard to a minimal ecological footprint based on the plurality of sustainability data items and the at least one remaining lifetime (S3); and
d. Providing the optimized maintenance schedule as output (S4) .

2. Computer-implemented method according to claim 1, wherein the plurality of sustainability data items is stored in a volatile storage unit or a non-volatile storage unit.

3. Computer-implemented method according claim 1 or claim 2, wherein a. Providing the plurality of sustainability data items comprises
receiving the plurality of sustainability data items from the storage unit by means of an input interface; wherein
the input interface is preferably an application programming interface, API, even more preferably a Representational State Transfer-API.

4. Computer-implemented method according to any of the preceding claims, wherein the at least one remaining lifetime is determined for each sustainability data item of the plurality of sustainability data items.

5. Computer-implemented method according to any of the preceding claims, further comprising
Maintaining the technical system or the at least one technical component of the technical system using the optimized maintenance schedule.

6. Computer-implemented method according to any of the preceding claims, further comprising
- Outputting the optimized maintenance schedule;
- Storing the optimized maintenance schedule;
- Displaying the optimized maintenance schedule;
- Transmitting the optimized maintenance schedule to a computing unit; and/or
- Evaluating the optimized maintenance schedule.

7. A computer program product directly loadable into an internal memory of a computer, comprising software code portions for performing the steps according to any one of the preceding claims when said computer program product is running on a computer.

8. Technical system for performing the method according to claims 1 - 6.
